# EUROPÄISCHE PATENTSCHRIFT

(11) **EP 1 772 078 B1**
(45) Veröffentlichungstag und Bekanntmachung des Hinweises auf die Patenterteilung: **30.04.2008**
(21) Anmeldenummer: 06014880.6
(22) Anmeldetag: 18.07.2006
(51) Int. Cl.: A47F 1/12

(54) **Warenvorschubsystem**
Goods advancing system
Dispositif pour avancer des produits

(30) Priorität: 10.10.2005 DE 102005048750; 31.03.2006 DE 202006005187 U
(43) Veröffentlichungstag der Anmeldung: 11.04.2007
(73) Patentinhaber: VKF Renzel GmbH, 46419 Isselburg (DE)
(72) Erfinder: Renzel, Heinz, 46399 Bocholt (DE)
(74) Vertreter: Habbel, Ludwig

(56) Entgegenhaltungen:
- GB-A- 2 392 667
- US-A- 4 200 201

## Beschreibung

Die Erfindung betrifft ein Warenvorschubsystem nach dem Oberbegriff des Anspruchs 1.

Derartige Warenvorschubsysteme sind aus der GB 2 392 667 A und insbesondere der US 4 200 201 bekannt. Sie werden in Regalen eingesetzt, um bei Entnahme der jeweiligen vordersten Ware die weiter hinten liegenden Waren nachzuschieben.

Die als Antriebsmittel dienende Feder ist gemäß der US 4 200 201 in einem Gehäuse gelagert, wobei die Gesamtvorrichtung recht aufwendig ausgebildet ist.

Der Erfindung liegt die Aufgabe zugrunde, die gattungsbildende Einrichtung unter Beibehaltung einer gekapselten Antriebsfeder einfacher aufzubauen und damit kostengünstiger zu gestalten.

Diese der Erfindung zugrundeliegende Aufgabe wird durch die Lehre des Hauptanspruches gelöst.

Dadurch, dass das Gehäuse aus zwei Halbschalen besteht, die das Antriebsrad aufnehmen, wobei die beiden Halbschalen werkzeuglos miteinander verbunden werden, wird eine schnelle und problemlose Montage des Gehäuses erreicht, in dem die beiden Gehäuseschalen um das Antriebsrad herum angeordnet werden bzw. das Antriebsrad in eine Gehäuseschale eingelegt und anschließend die beiden Gehäuseschalen miteinander verbunden werden. Hierzu bedarf es nicht der Handhabung von Schrauben, sondern es können einfache Steckverbindungselementen verwendet werden.

Vorteilhafte Ausgestaltungen der Erfindung sind in den Unteransprüchen erläutert.

Vorteilhaft kann die Feder innerhalb des Antriebsrades angeordnet sein, so dass sie nicht nur innerhalb des Schiebers angeordnet ist, sondern sogar innerhalb des im Gehäuse angeordneten Antriebsrades, so dass hierdurch eine optimale Kapselung der Spiralfeder und somit ein besonders hoher Schutz vor eventuellen Beschädigungs- oder Verletzungsgefahren ermöglicht wird. Um eine Abstützung der Spiralfeder am Gehäuse zu ermöglichen, erstreckt sich eine mit dem Gehäuse verbundene Achse in das Innere des Antriebsrades hinein.

Vorteilhaft kann eine derartige Achse gleichzeitig als Lagerung für das Antriebsrad dienen, so dass die Anzahl erforderlicher Bauelemente im Sinne einer möglichst wirtschaftlichen Herstellung des Warenvorschubsystems möglichst gering gehalten werden kann.

Die Warenvorschubsysteme weisen üblicherweise eine Stirnplatte auf, um eine möglichst großflächige Anlage an den vorzuschiebenden Waren zu ermöglichen, so dass beispielsweise auch Verpackungen, die nicht eigensteif sind, wie beispielsweise Kunststoffbeutel problemlos vorgeschoben werden können. Die Stirnplatte kann vorteilhaft als ein Verschlusselement ausgestaltet sein, welches die beiden Gehäusehalbschalen miteinander verbindet, indem sie beispielsweise die beiden Halbschalen verklammert. Auf diese Weise kann die Stirnplatte als separates Bauteil gefertigt werden, so dass die Formgebung für die Gehäuseschalen möglichst einfach zugunsten preisgünstiger Spritzgussformen ausgestaltet sein kann und die Montage der Stirnplatte insofern einen Produktionsschritt einspart, als diese Stirnplatte bei ihrer Montage am übrigen Gehäuse gleichzeitig die Verbindung der beiden Gehäuseschalen bildet, welche die beiden Gehäuseschalen zusammenhält.

Vorteilhaft kann die Spiralfeder als Triebfeder ausgestaltet sein. Es handelt sich dabei um eine ebenfalls spiralförmig verlaufende Feder, wobei die Spiralfedern grundsätzlich einen Abstand zwischen den einzelnen Windungen aufweisen, während bei Triebfedern die einzelnen Windungen dieser Art von Spiralfedern eng aneinander anliegen, so dass auf kleinem erforderlichem Bauraum eine starke Antriebskraft vorgesehen sein kann.

Zur besonders sicheren Anordnung der vorgesehenen Spiralfeder, insbesondere Triebfeder, kann das hohl ausgestaltete Antriebsrad allseitig geschlossen sein. Es kann hierzu beispielsweise etwa topfartig ausgestaltet sein, so dass entlang der Rundung des "Topfes" die mit der Schiene zusammenwirkende Profilierung vorgesehen ist, und dass Antriebsrad mittels eines seitlichen "Deckels" geschlossen wird, oder das Antriebsrad kann aus zwei im Querschnitt etwa U-förmigen Hälften bestehen, wobei die Nahtstelle dieser beiden Hälften durch die Profilierung des Antriebsrades verläuft.

Die Profilierung zwischen Antriebsrad und Schiene kann in einfacher Weise ähnlich einem Zahnrad bzw. einer Zahnstange ausgestaltet sein.

Ein zuverlässiger Halt des Schiebers an der Schiene kann durch eine schwalbenschwanzähnliche Längsprofilierung der Schiene und des Schiebers sichergestellt werden.

Ein Ausführungsbeispiel der Erfindung wird anhand der rein schematischen Darstellungen nachfolgend näher erläutert. Dabei zeigt
- Fig. 1: ein Warenvorschubsystem in perspektivischer Ansicht und
- Fig. 2: das Warenvorschubsystem von Fig. 1 in auseinander gezogener Darstellung, mit entfernter Antriebsfeder.

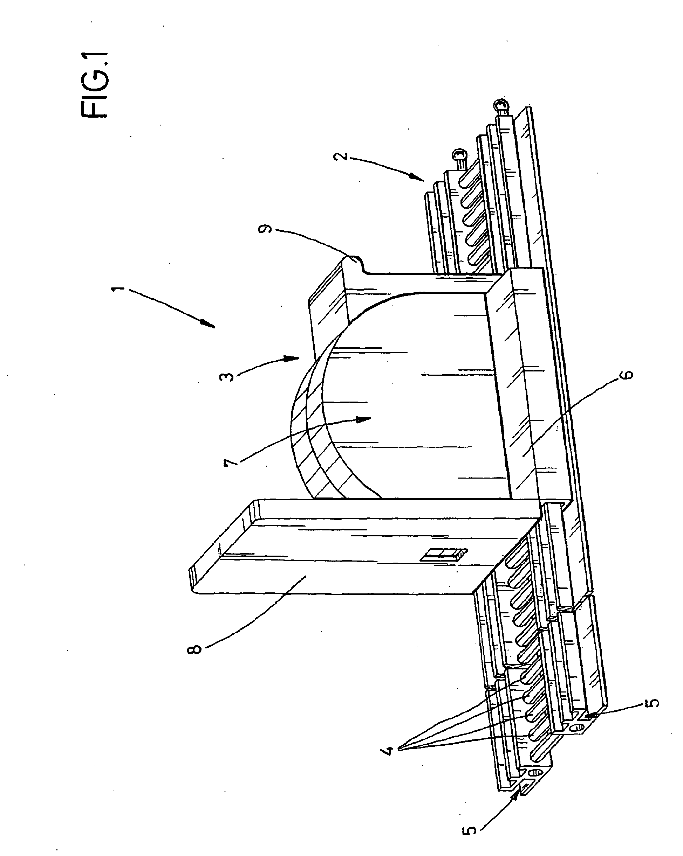

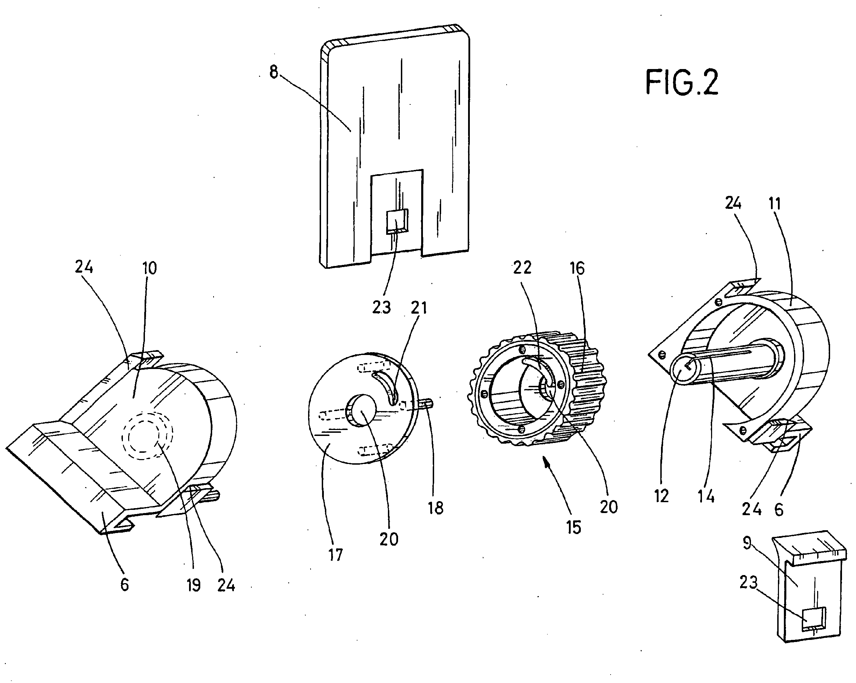

In Fig. 1 ist mit 1 insgesamt ein Warenvorschubsystem bezeichnet, welches als zwei wesentliche Komponenten eine Schiene 2 und einen Schieber 3 aufweist. Die Schiene 2 ist über Querstreben 4 etwa zahnstangenartig über ihre Länge profiliert. Weiterhin weist sie an ihren beiden Längsseiten U-förmige Längsnuten 5 auf, so dass die Schiene 2 vom Schieber 3 umgriffen werden kann und der Schieber 3 auf diese Weise gegen abhebende Kräfte mittels zweier Klauen 6 gesichert und höhenfixiert ist. Der Schieber 3 besteht, wie aus Fig. 1 ersichtlich ist, aus einem Gehäuse 7 mit einer vorderen Stirnplatte 8, den beiden seitlichen Klauen 6 und einem hinteren Verschlusselement 9. Im Einzelnen ist der Aufbau des Schiebers 3 aus Fig. 2 näher ersichtlich: Das Gehäuse 7 besteht aus zwei Gehäuseschalen 10 und 11, die jeweils eine der Klauen 6 ausbilden. Die Gehäuseschale 11 weist zudem eine Achse 12 auf, die mit einem L-förmig verlaufenden Schlitz 14 versehen ist.

Im Inneren des Gehäuses 7 ist ein Antriebsrad 15 vorgesehen, welches eine umlaufende Profilierung 16 aufweist, die mit den Querstreben 4 der Schiene 2 derart zusammenwirkt, dass das Antriebsrad 15 wie ein Zahnrad auf einer Zahnschiene auf der Schiene 2 abrollt. Die komplementäre Profilgestaltung von Schiene 2 und Antriebsrad 15 ermöglicht eine Kraftübertragung, so dass durch eine Drehbewegung des Antriebsrades 15 der Schieber 3 auf der Schiene 2 entlang bewegt werden kann.

Die zugehörige Antriebsfeder ist in Fig. 2 nicht dargestellt. Sie wird im hohlen Inneren des Antriebsrades 15 angeordnet und mit einem Ende im Schlitz 14 der Achse 12 verankert, welche sich in das hohle Innere des Antriebsrades 15 erstreckt. Das andere Ende der Triebfeder wird am Antriebsrad 15 selbst festgelegt und zwar an einem Deckel 17 des Antriebsrades 15, welcher über vier Verbindungsstifte 18 drehfest mit dem übrigen Antriebsrad 15 verbunden ist.

Die Achse 12 der Gehäusehälfte 11 ist in der gegenüberliegenden Gehäusehälfte 10 gelagert. Hierzu weist die Gehäusehälfte 10 einen nach innen vorstehenden Ring 19 auf, der das frei endende Ende der Achse 12 umgibt, wenn die beiden Gehäusehälften 10 und 11 einander anliegen.

Das Antriebsrad 15 weist zwei Öffnungen 20 auf, von denen eine im Deckel 17 vorgesehen ist und wobei sich die Achse 12 durch die beiden Öffnungen 20 des Antriebsrades 15 erstreckt.

Der Deckel 17 weist ein Fenster 21 auf, welches einen komplementären Steg 22 mit etwa bananenförmigem Querschnitt umgibt, welcher Steg 22 im Innenraum des Antriebsrades 15 vorgesehen ist. In dem schmalen Spalt zwischen dem Steg 22 und der Umfangswandung des Antriebsrades 15 verläuft das mit dem Antriebsrad 15 verbundene Ende der Triebfeder. Es hintergreift den Steg 22, so dass dieser ein Widerlager bildet, damit, wenn das Antriebsrad 15 entlang der Schiene 2 abrollt, die Triebfeder je nach Laufrichtung des Antriebsrades 15 entweder gespannt oder entspannt werden kann.

Der Deckel 17 dient daher zur Stabilisierung des Steges 22 und ermöglicht durch die Stabilisierung des Steges eines besonders robuste Konstruktion des Antriebsrades 15. Zudem stellt der Deckel 17 einen besonders vorteilhaften Schutz dar, da es den hohlen Innenraum des Antriebsrades 15 abdeckt und damit eine allseitig geschlossene Ausgestaltung des Antriebsrades 15 bewirkt.

Eine in der Zeichnung nicht dargestellte Ausführungsvariante des Schiebers 3 könnte einen ins Innere des Gehäuses 7 ragenden Ring an der Gehäuseschale 10 aufweisen, der einen größeren Durchmesser als der in Fig. 2 dargestellte Ring 19 aufweist und der statt des Deckels 17 das übrige, unveränderte Antriebsrad 15 führt, so dass bei einer derartigen Variante die im übrigen grundsätzlich unveränderte Konstruktion des Schiebers 3 mit einer verringerten Anzahl erforderlicher Bauteile geschaffen werden kann.

Fig. 2 zeigt, dass sowohl die Stirnplatte 8 als auch das Verschlusselement 9 jeweils ein Fenster 23 aufweist und dass die beiden Gehäuseschalen 10 und 11 schwalbenschwanzartige Profilnuten 24 aufweisen, welche von komplementär gestalteten Vorsprüngen der Stirnplatte 8 bzw. des Verschlusselementes 9 umgriffen werden, so dass werkzeuglose, lediglich durch Aufschieben der Stirnplatte 8 und des Verschlusselementes 9 die beiden Gehäusehälften 10 und 11 zum geschlossenen Gehäuse 7 miteinander verbunden werden können. Die Fenster 23 ermöglichen eine Sichtkontrolle, ob das Gehäuse 7 korrekt montiert ist.

Das montierte Gehäuse 7 wie es aus Fig. 1 ersichtlich ist kann anschließend an der Vorderseite der Schiene 2 auf die Schiene aufgesetzt und dann entlang der Schiene 2 nach hinten verschoben werden, so dass die Klauen 6 in die Längsnuten 5 eingeschoben werden und der Schieber 3 auf diese Weise gegen abhebende Kräfte auf der Schiene 2 fixiert ist. Die weitere Schiebebewegung des Schiebers 3 nach hinten bewirkt zwangsläufig eine Drehbewegung des Antriebsrades 15, bei welcher die im Antriebsrad 15 angeordnete Triebfeder gespannt wird. In dieser Stellung kann das Regal, auf dem sich das Warenvorschubsystem 1 befindet, mit Waren befüllt werden. Wird der Schieber 3 anschließend losgelassen, so legt er sich federbelastet an der hintersten Ware an, indem das Antriebsrad, unter Einwirkung der Triebfeder, den Schieber 3 entlang der Schiene 2 nach vorne antreibt. Sobald eine der mehreren Waren entnommen wird, schiebt der Schieber 3 mittels der Stirnplatte 8 die verbleibenden Waren nach vorn, bis diese einem im Regal vorgesehenen Anschlag anliegen.

## Patentansprüche

1. Warenvorschubsystem (1),
mit einer Schiene (2),
und einem längs der Schiene (2) verfahrbaren Schieber (3), der eine Spiralfeder trägt,
wobei der Schieber (3) federbelastet aus einer hinteren, die Feder stärker spannenden, in eine vordere die Feder weniger spannende Stellung verschiebbar an der Schiene (2) gehalten ist und
die Schiene (2) eine über ihre Länge verlaufende Profilierung
und der Schieber (3) ein mit der Schienenprofilierung zusammenwirkendes Antriebsrad (15) aufweist,
wobei die Spiralfeder einerseits mit einem Gehäuse (7) des Schiebers (3) und andererseits mit dem Antriebsrad (15) fest verbunden ist,
**dadurch gekennzeichnet, dass** das Gehäuse (7) zwei Halbschalen (10, 11) aufweist, die das Antriebsrad (15) aufnehmen, wobei die beiden Halbschalen (10, 11) werkzeuglos mittels Steckverbindungselementen miteinander verbindbar sind.

2. Warenvorschubsystem nach Anspruch 1, **dadurch gekennzeichnet, dass** das Antriebsrad (15) hohl ausgestaltet ist und die Spiralfeder aufnimmt,
wobei das Gehäuse (7) eine Achse (12) aufweist, die sich in das Innere des Antriebsrades (15) erstreckt und das gehäuseseitige Ende der Spiralfeder hält.

3. Warenvorschubsystem nach Anspruch 2, **dadurch gekennzeichnet, dass** das Antriebsrad (15) allseitig geschlossen ausgestaltet ist.

4. Warenvorschubsystem nach Anspruch 2, **dadurch gekennzeichnet, dass** die Achse (12) die Lagerung für das Antriebsrad (15) bildet.

5. Warenvorschubsystem nach einem der vorhergehenden Ansprüche, **gekennzeichnet durch** eine Stirnplatte (8), die zur Anlage an den vorzuschiebenden Waren an der Vorderseite des Gehäuses (7) vorgesehen ist und als ein die beiden Halbschalen (10, 11) zusammenhaltendes Verbindungselement ausgestaltet ist.

## Claims

1. Goods feeding system (1),
with a rail (2),
and a slide (3), which can travel along the rail (2), which carries a coil spring,
in which the slide (3) is kept spring-loaded so that it can move on the rail (2) from a rear position, which tensions the spring more, into a front position, which tensions the spring less, and
the rail (2) has profiling running along its length
and the slide (3) has a drive wheel (15) working together with the rail profiling,
in which the coil spring is connected firmly to a housing (7) of the slide (3) on the one hand and to the drive wheel (15) on the other hand,
**characterised in that** the housing (7) has two half shells (10, 11), which house the drive wheel (15), in which both half shells (10, 11) may be connected to each other without using a tool by means of plug connection elements.

2. Goods feeding system according to claim 1, **characterised in that** the drive wheel (15) is made hollow and houses the coil spring,
in which the housing (7) has a shaft (12), which extends inside the drive wheel (15) and holds the end of the coil spring on the housing side.

3. Goods feeding system according to claim 2, **characterised in that** the drive wheel (15) is made closed on all sides.

4. Goods feeding system according to claim 2, **characterised in that** the shaft (12) forms the bearing for the drive wheel (15).

5. Goods feeding system according to one of the previous claims, **characterised by** a front plate (8), which is provided on the front of the housing (7) for applying to the goods to be fed and is made as a connection element holding both half shells (10, 11) together.

## Revendications

1. Système d'avancement de marchandises (1)
avec un rail (2)
et une coulisse (3) pouvant se déplacer le long du rail (2) et portant un ressort hélicoïdal,
laquelle coulisse (3) est retenue sur le rail (2) sous la contrainte d'un ressort de façon à pouvoir se déplacer d'une position postérieure tendant fortement le ressort à une position antérieure tendant moins fortement le ressort et
le rail (2) possède un profilage s'étendant sur sa longueur et la coulisse (3) une roue d'entraînement (15) coopérant avec le profilage,
le ressort hélicoïdal étant fixé d'une part à un boîtier (7) de la coulisse (3) et d'autre part à la roue d'entraînement (15),
**caractérisé en ce que** le boîtier (7) présente deux demi-enveloppes (10, 11) qui reçoivent la roue d'entraînement (15), les deux demi-enveloppes (10, 11) pouvant être assemblées entre elles sans outils à l'aide d'éléments d'enfichage.

2. Système d'avancement de marchandises selon la revendication 1, **caractérisé en ce que** la roue d'entraînement (15) est creuse et reçoit le ressort hélicoïdal, le boîtier (7) possédant un axe (12) qui s'étend à l'intérieur de la roue d'entraînement (15) et retient l'extrémité du ressort hélicoïdal située du côté du boîtier.

3. Système d'avancement de marchandises selon la revendication 2, **caractérisé en ce que** la roue d'entraînement (15) est fermée sur toutes ses faces.

4. Système d'avancement de marchandises selon la revendication 2, **caractérisé en ce que** l'axe (12) forme le support de la roue d'entraînement (15).

5. Système d'avancement de marchandises selon l'une des revendications précédentes, **caractérisé en ce qu'**il comporte une plaque frontale (8) conçue pour s'appuyer sur les marchandises à faire avancer sur la face antérieure du boîtier (7) et conçue comme un élément de liaison retenant ensemble les deux demi-enveloppes (10, 11).
